# EUROPÄISCHE PATENTSCHRIFT

(11) **EP 1 048 198 B1**
(45) Veröffentlichungstag und Bekanntmachung des Hinweises auf die Patenterteilung: **24.11.2004**
(21) Anmeldenummer: 00108891.3
(22) Anmeldetag: 27.04.2000
(51) Int. Cl.: A01D 34/86

(54) **Mähgerät**
Mowing device
Dispositif faucheur

(30) Priorität: 30.04.1999 DE 29907728 U
(43) Veröffentlichungstag der Anmeldung: 02.11.2000
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse & Busse Patentanwälte

(56) Entgegenhaltungen:
- EP-A- 0 664 076
- EP-A- 0 682 856
- WO-A-86/00002
- DD-A- 277 824
- DE-A- 19 611 281
- DE-U- 29 717 024
- GB-A- 2 129 265
- GB-A- 2 251 536

## Beschreibung

Die Erfindung betrifft ein Mähgerät mit einem über einen Ausleger an einem Fahrzeug festlegbaren Mähkopf gemäß dem Oberbegriff des Anspruchs 1. Derartige Mähgeräte mit Meßwertgeber im Bereich des Mähkopfes sind aus EP-A-0 664 076, DD-A-277 824, WO-A-86 00002 und GB-A-2 251 536 prinzipiell bekannt.

Die Erfindung befaßt sich mit dem Problem, ein Mähgerät mit einem Mähkopf der angegebenen Art zu schaffen, dessen zur Steuerung vorgesehene Sensoranordnung besonders einfach zu installieren ist und ohne zusätzliche Konstruktions-Bauteile eine optimale Bodenanpassung des Mähkopfes ermöglicht.

Ausgehend von einem Mähgerät mit einem Mähkopf gemäß dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 14 verwiesen.

Das erfindungsgemäße Mähgerät ist mit einem Mähkopf versehen, der unmittelbar an einem die Verbindung zum Fahrzeugausleger bildenden Tragteil mit einem dessen Biegungsund/oder Torsionsbelastungen erfassenden Meßwertgeber für die Sensoranordnung versehen ist. Dabei ist der Meßwertgeber ohne zusätzliche, als belastungsaufnehmende Zwischenglieder vorgesehene Baugruppen einem jeweils zu erfassenden Betriebs-Zustand des Gerätes ausgesetzt. Über eine direkte Umwandlung von aus elastischer Deformation des Tragteiles resultierenden Längenänderungen wird ein elektrisches Ausgangs-Signal am jeweiligen Meßwertgeber erzeugt und mit der als Wandler vorgesehenen Verstärkungseinheit so in der Sensoreinheit verarbeitet, daß die an sich bekannte Antriebshydraulik des Fahrzeugauslegers gesteuert werden kann.

Die erfindungsgemäß verwendete Sensoranordnung ist dabei mit Meßwertgebern in Form von Dehnungsmeßstreifen versehen, die auf dem Tragteil aufgeklebt sind und damit keine zusätzliche Installation von Stütz-, Tast- und/oder Deformationselementen an dem Mähkopf erfordern. Über eine optimale Auswahl der an sich bekannten Dehnungsmeßstreifen kann die Sensoranordnung an die Konstruktionsbauteile des Mähgerätes so angepaßt werden, daß mit geringem Aufwand eine optimale Steuerung auch unterschiedlicher Mähkopf-Ausführungen möglich ist und die Sensoranordnung entsprechend deren Verbindungspositionen am Tragteil eine für die automatische Steuerung der Hydraulikaggregate hinreichende Empfindlichkeit aufweist. Mit der Sensoranordnung wird der Mähkopf automatisch so geführt, daß auch unter schwierigen Einsatzbedingungen eine Niveau- und Höhenanpassung, eine Regelung des Auflagedruckes und eine Verschwenkung bei Hindernissen erreicht werden.

Weitere Einzelheiten und Vorteile ergeben sich aus der nachfolgenden Beschreibung und den Zeichnungen, die eine Sensoranordnung an unterschiedlichen Tragteilen des erfindungsgemäßen Mähgeräts veranschaulichen. In der Zeichnung zeigen:
- Fig. 1: eine Perspektivdarstellung eines Mähkopfes mit einem an einem zum Fahrzeugausleger hin gerichtesten Tragteil,
- Fig. 2: eine vergrößerte Ausschnittsdarstellung des Mähkopfes im Bereich des Tragteils gemäß Fig. 1,
- Fig. 3: ein schematische Steitenansicht des Mähkopfes mit in Einbaulage am Tragteil befindlichen Meßwertgebern einer Sensoranordnung,
- Fig. 4: eine Rückansicht des Mähkopfes gemäß Fig. 3,
- Fig. 5: eine Einzeldarstellung des als Anschlußrohr ausgebildeten Tragteils des Mähkopfes ähnlich Fig. 2,
- Fig. 6: eine Vorderansicht des Mähkopfes mit einer dessen Anwendung an einer Bodenschräge verdeutlichenden Betriebsstellung,
- Fig. 7: eine Seitenansicht des Mähkopfes ähnlich Fig. 3 mit an dessen Stützrolle angeordneten Dehnungsmeßstreifen,
- Fig. 8: eine Vorderansicht des Mähkopfes in Verbindung mit einem Fahrzeugausleger, an dessen Auslegearm die Dehnungsmeßstreifen vorgesehen sind,
- Fig. 9: eine vergrößerte Ausschnittsdarstellung des Auslegearms gemäß Fig. 8,
- Fig. 10: eine Einzeldarstellung einer bodenseitig am Mähkopf vorgesehenen Stützrolle, deren Stützachsen mit Dehnungsmeßstreifen versehen sind, und
- Fig. 11: eine Prinzipdarstellung eines Schaltplans der Sensoranordnung mit Dehnungsmeßstreifen und deren Verbindung zur hydraulischen Steuerung des Mähkopfes.

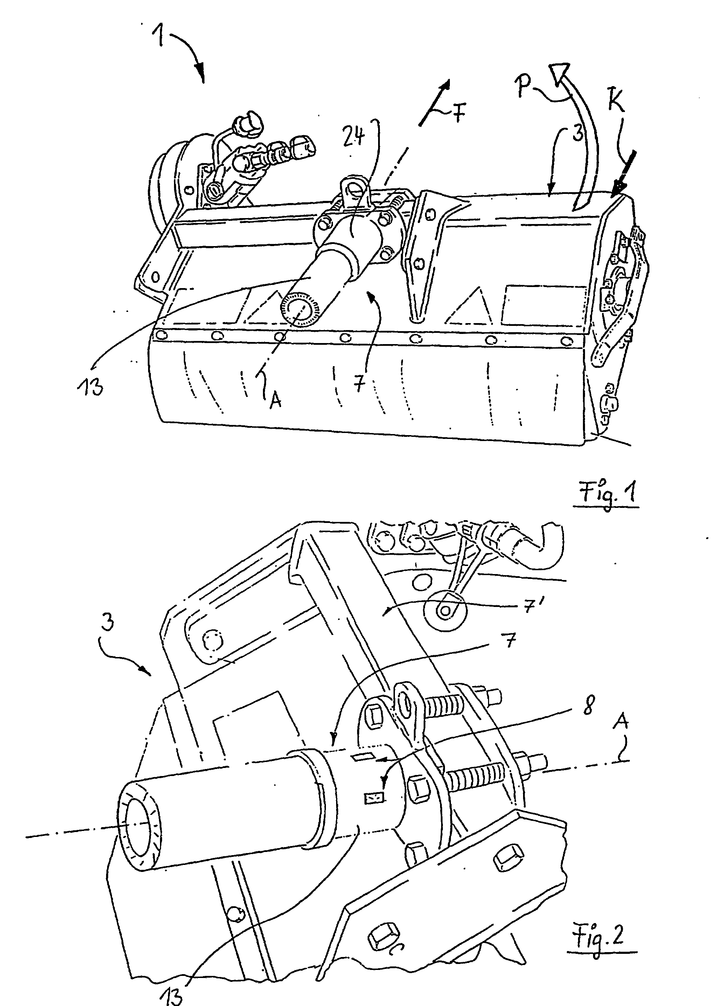

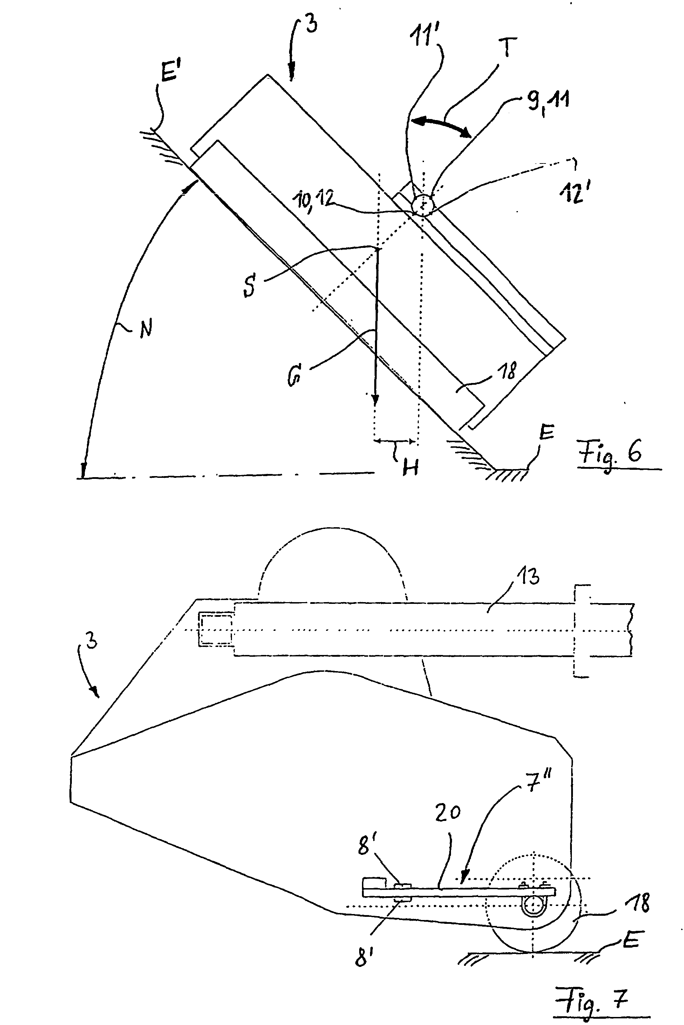

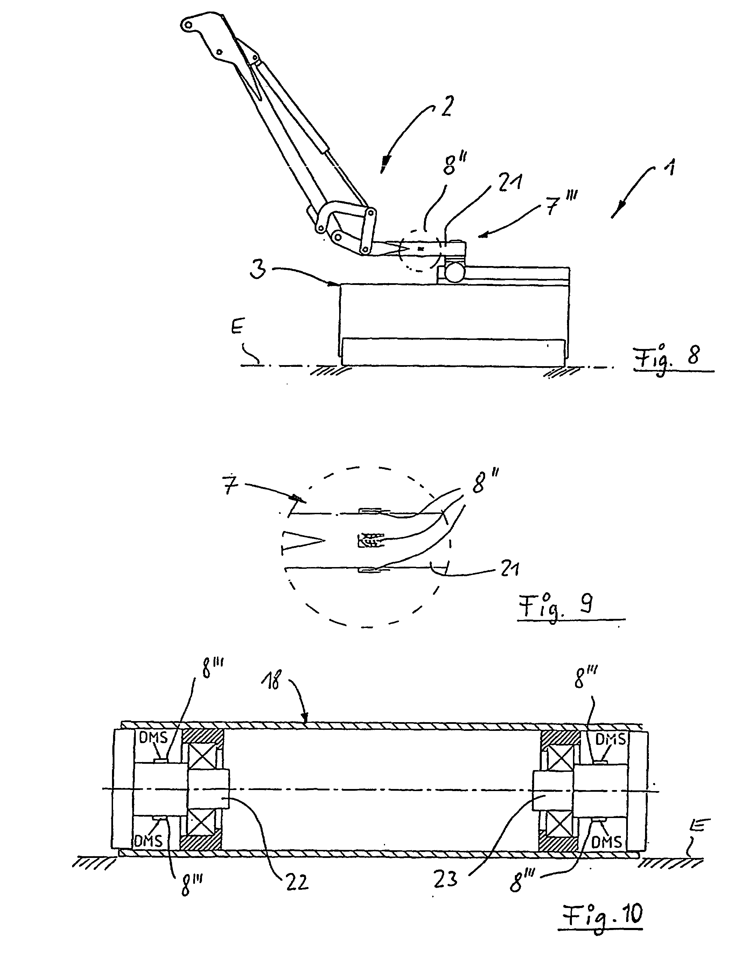

In Fig. 1 ist ein insgesamt mit 1 bezeichnetes Mähgerät mit einem über einen Ausleger 2 (Fig. 8) an einem nicht näher dargestellten Fahrzeug festlegbaren Mähkopf 3 veranschaulicht. Dieser Mähkopf 3 des Auslegermähgerätes 1 ist mit einer allgemein mit 4 bezeichneten und einen Verstärker 4' aufweisenden Sensoranordnung (Fig. 11) versehen, die über eine SPS-Steuerung 5 mit der Antriebshydraulik 6 des Fahrzeugs verbunden ist. Damit ist der Mähkopf 3 bei sich änderndem Bodenprofil (beispielsweise eine Neigung N in der Ebene E', Fig. 6) so verstellbar, daß die nicht sichtbaren Schneidorgane mit ständig gleichem Abstand über dem Erdboden geführt werden. Die Sensoranordnung 4 liefert ein Meßsignal, mit dem eine an sich bekannte hydraulische Regeleinrichtung manuell oder automatisch so steuerbar ist, daß eine schnelle Anpassung des Mähkopfes 3 an sich während einem Mähvorgang ändernde Betriebsstellungen möglich ist.

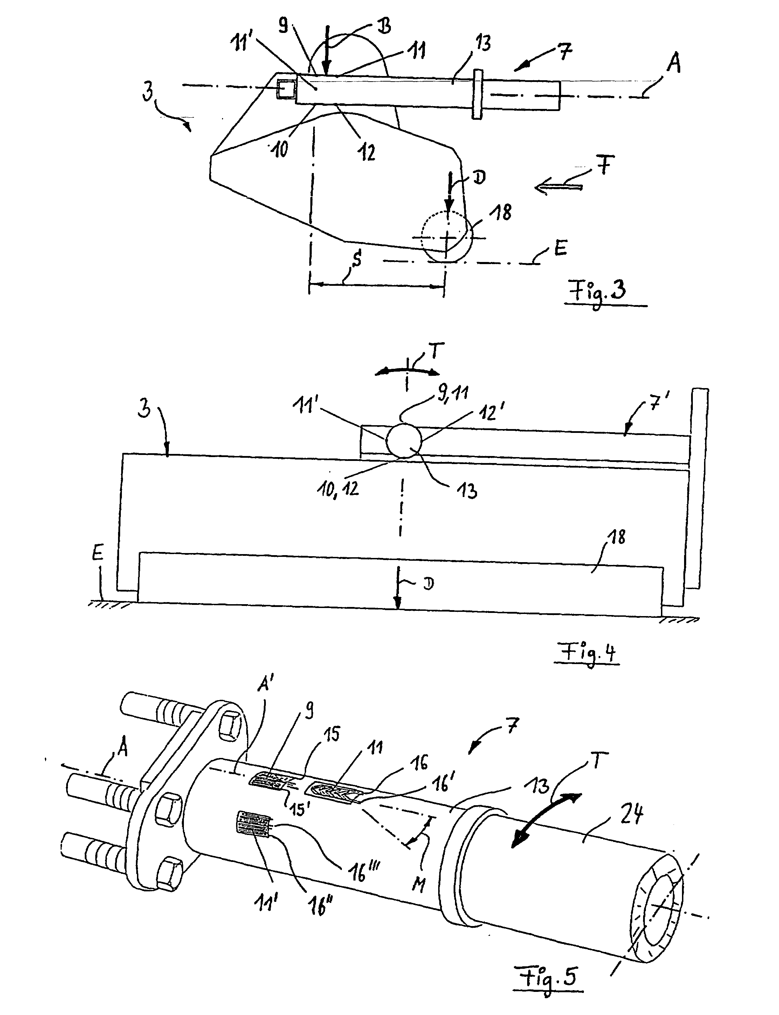

Das erfindungsgemäße Mähgerät 1 ist im Bereich eines die Verbindung des Mähkopfes 3 mit dem Fahrzeugausleger 2 bildenden Tragteils 7 unmittelbar mit der Sensoranordnung 4 versehen, wobei in zweckmäßiger Ausführung zumindest ein Belastungszustände des Tragteils 7 direkt erfassender Meßwertgeber 8 der Sensoranordnung 4 direkt auf dem Tragteil 7 angeordnet. Die vergrößerte Ausschnittsdarstellung gemäß Fig. 5 zeigt, daß an dem Tragteil 7 mehrere Meßwertgeber 8 vorgesehen sind. Ebenso ist denkbar, an der Stützkonstruktion des Mähkopfes 3 an mehreren der Tragteilen 7, 7' jeweilige Meßwertgeber 8 anzuordnen.

Die Zusammenschau der Prinzipdarstellungen gemäß Fig. 3 bis 6 verdeutlicht, daß als Meßwertgeber 8 mehrere Dehnungsmeßstreifen 9, 10; 11 , 12 und 11', 12' auf einem als Tragteil 7 vorgesehenen Anschlußrohr 13 (Fig. 2) des Mähkopfes 3 festgelegt sind, wobei die Dehnungsmeßstreifen in zweckmäßiger Ausführung durch eine Klebeverbindung stoffschlüssig auf der Oberflächenkontur des Anschlußrohres 13 gehalten sind.

An dem Anschlußrohr 13 sind die paarweise zusammenwirkenden Dehnungsmeßstreifen 9, 10; 11, 12 und 11', 12' so angeordnet, daß über Verbindungsleitungen L und eine jeweilige Brückenschaltung 14, 14' (Fig. 11) ein an der insbesondere speicherprogrammierbaren Steuerelektronik 5 (SPS) auswertbares Signal anliegt. Das Paar 9, 10 der Dehnungsmeßstreifen ist in einer die Biegebelastung B des Anschlußrohres 13 über eine Vollbrücke erfassenden Einbaulage angeordnet, wobei die Verbindungsleitungen 15, 15' innerhalb der Dehnungsmeßstreifen 9, 10 mit im wesentlichen achsparallel (A') angeordneten Meßdrähten, beispielsweise Widerstandsdrähten aus Konstantan, verbunden sind (Fig. 5). Ein zweites Paar 11, 12 der Dehnungsmeßstreifen ist für eine Erfassung der Torsionsbelastung T am Anschlußrohr 13 vorgesehen, wobei die Dehnungsmeßstreifen bzw. deren an Verbindungsleitungen 16, 16' anliegende Meßdrähte eine um 45° zur Längsachse A des Bauteils geneigte Einbaulage (Pfeil M, Fig. 5) aufweisen. Ebenso ist denkbar, daß die vorbeschriebenen DMS-Anordnungen mit einer Halb- oder Viertelbrücke (nicht dargestellt) am Verstärker 4' anliegen.

Die Ansichten gemäß Fig. 3 und Fig. 4 verdeutlichen, daß bei einer im wesentlichen horizontal verlaufenden Arbeitsebene E über eine Tastrolle 18 bei Bewegung in einer Fahrtrichtung F ein gleichmäßiger Druck auf die Tragbauteile des Mähkopfes 3 (Pfeil D) wirkt. Die Tastrolle 18 bildet dabei zur Einbauposition der Meßwertgeber 8 einen Stützabstand S, der gleichzeitig als Hebelarm in Längsrichtung des Anschlußrohres 13 wirksam ist, so daß ein für die Erfassung des Auflagedruckes hinreichendes Biegemoment B im Bereich der Dehnungsmeßstreifen 9, 10 wirksam ist und über deren Meßsignal bei einer Steigung in Fahrtrichtung F eine entsprechende Hubbewegung über die Steuerhydraulik ausgelöst wird.

Die Darstellung gemäß Fig. 4 zeigt eine Rückansicht der Arbeitsposition des Mähkopfes 3, während der die zur Erfassung des Biegemoments B und des Torsionsmomentes T vorgesehenen Dehnungsmeßstreifen 9, 10; 11, 12; 11', 12' keine Veränderung erfassen, da das Bodenprofil in der Ebene E waagerecht ist.

In Fig. 6 ist der Mähkopf 3 in eine Arbeitsposition verlagert, in der im Bereich der Torsions-Dehnungsmeßstreifen 11 und 12 die Neigung N der Bodenebene E' erfaßt wird und dabei der Mähkopf 3 mittels der Hydraulik solange geschwenkt wird, bis der Auflagedruck über die gesamte Länge der Tastrolle 18 konstant ist. Dabei wird das Torsionsmoment im Anschlußrohr 13 dadurch verstärkt, daß das durch einen Pfeil G veranschlaulichte Gewicht des Mähkopfes 3 an diesem in einem Schwerpunkt S wirksam ist, der am Anschlußrohr 13 im Bereich der Meßwertgeber 8 einen als Hebel wirksamer Abstand H bildet.

Beim Schwenken des Mähkopfes 3 kann aufgrund dieses Gewichts G ein zusätzliches Torsionsmoment-Signal an einer der 45°-Dehnungsmeßstreifen-Rosetten 11, 12 (Fig. 3 bis 5) erzeugt werden, so daß damit die Meßwertaufnahme verfälscht ist. Zur Vermeidung dieses Nachteils werden die zusätzlichen Dehnungsmeßstreifen 11' und 12' seitlich an das Anschlußrohr 13 angebracht und deren Ausgangssignal zusätzlich auf die als Vollbrücke für das Torsionsmoment T vorgesehene Brückenschaltung 14 (Fig. 11) gegeben, so daß nur das durch die Neigung N verursachte Torsionsmoment-Signal als verfügbares Steuersignal anliegt und eine diesem entsprechende Regelung der hydraulischen Antriebs-Organe erfolgt. Dieses Torsionsmoment-Signal ist nicht durch ein seitliches Verschwenken des Mähgerätes 3 bzw. durch den zwischen Schwerkraftlinie G und Auflagebereich der Meßwertgeber 8 gebildeten Hebelarm H beeinflußt (Fig 6).

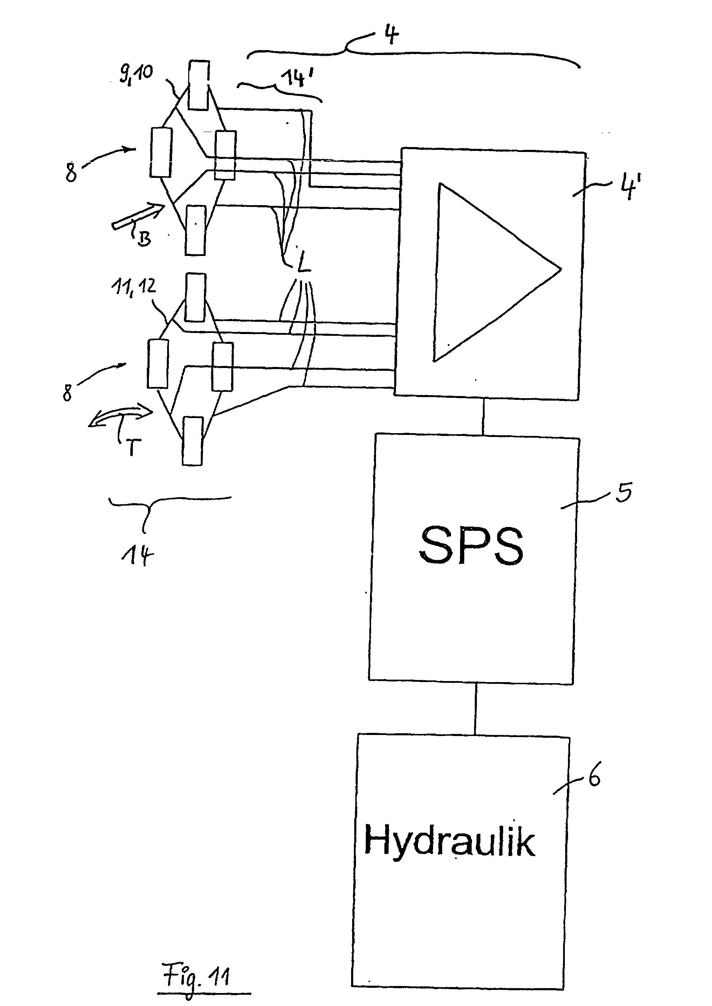

In der Darstellung gemäß Fig. 7 sind die Dehnungsmeßstreifen als Meßwertgeber 8' im Bereich des Mähkopfes 3 auf einer dessen bodenseitige Stützrolle 18 aufnehmenden Tragstrebe 20 als Tragteil 7'' vorgesehen. Die Ausführungsform gemäß Fig. 8 und 9 zeigt die Dehnungsmeßstreifen-Meßwertgeber 8'' an dem als ein Auslegearm 21 ausgebildeten Tragteil 7''' des Mähgerätes 3 und in der Darstellung gemäß Fig. 10 sind Dehnungsmeßstreifen als Meßwertgeber 8''' unmittelbar auf jeweiligen Achsteilen 22, 23 der Stützrolle 18 aufgeklebt.

Für einen Schutz der auf dem Tragteil 7 (Fig. 5) befindlichen Dehnungsmeßstreifen 9, 10; 11, 12; 11', 12' ist in zweckmäßiger Ausführung eine über diesen positionierbare Abdeckung 24 (Fig. 1) vorgesehen, die lösbar so mit dem Anschlußrohr 13 verbunden ist, daß die Dehnungsmeßstreifen bzw. Meßwertgeber 8 und deren Verbindungsleitungen 15, 15',16, 16'; 16'', 16''' im Bedarfsfalle einfach zugänglich sind.

In Fig. 1 ist mit einem Pfeil K der Anlagemoment des Mähgerätes 1 bei dessen Bewegung in Fahrtrichtung F an einem Hindernis (nicht dargestellt) veranschaulicht, wobei eine in Pfeilrichtung K wirksame Kraft auf die Meßwertgeber 8 geleitet wird. Mittels der seitlichen Dehnungsmeßstreifen 11' und 12' am Anschlußrohr 13 wird in der Vollbrücke 14 für das Torsionsmoment T ein Ausgangs-Signal erzeugt und aus diesem die jeweilige Anlageseite der Kraft K (im dargestellten Fall rechts von der Mittellängsebene A) abgeleitet. Über den Verstärker 4' und die SPS-Steuerung 5 wird die Hydrauliksteuerung 6 des Fahrzeugs aktiviert und eine Stellbewegung ausgelöst, so daß das Mähgerät 1 in Pfeilrichtung P hochgeschwenkt und das Hindernis überfahren werden kann.

## Patentansprüche

1. Mähgerät mit einem über einen Ausleger (2) an einem Fahrzeug festlegbaren Mähkopf (3), dessen Auflagedruck (D) auf dem bearbeiteten Gelände (E, E') mit einer einen Meßwertgeber und einen Wandler aufweisenden Sensoranordnung (4) erfaßbar und durch eine mit dieser verbundene Hydraulik-Steuerung (4'; 5; 6) veränderbar ist, **dadurch gekennzeichnet, daß** das Mähgerät (3) zumindest im Bereich eines die Verbindung von Mähkopf (3) und Fahrzeugausleger (2) bildenden Tragteils (7; 7'; 7"; 7''') einen Belastungszustände (B; T) an diesem Tragteil (7; 7'; 7''; 7''') direkt erfassenden Meßwertgeber (8; 8'; 8''; 8''') aufweist, der von zumindest einem mit dem Tragteil durch eine Klebeverbindung verbundenen Dehnungsmeßstreifen (9, 10, 11, 12) gebildet ist.

2. Mähgerät nach Anspruch 1, **dadurch gekennzeichnet, daß** an dem Tragteil (7; 7'; 7''; 7''') mehrere Meßwertgeber (8; 8'; 8''; 8''') einer Sensoranordnung (4) vorgesehen sind.

3. Mähgerät nach Anspruch 1 oder 2, **dadurch gekennzeichnet, daß** dieses im Bereich mehrerer Tragteile (7; 7'; 7''; 7''') mit jeweiligen Meßwertgebern (8, 8', 8'', 8''') für die Sensoranordnung (4) versehen ist.

4. Mähgerät nach einem der Ansprüche 1 bis 3, **dadurch gekennzeichnet, daß** der Meßwertgeber (8; 8'; 8''; 8''') mit einem die Änderung der elektrischen Spannung und/oder des Widerstandes erfassenden Wandler (4') verbunden ist.

5. Mähgerät nach einem der Ansprüche 1 bis 4, **dadurch gekennzeichnet, daß** als Meßwertgeber (8; 8'; 8''; 8''') mehrere Dehnungsmeßstreifen (9, 10; 11, 12) auf dem Tragteil (7; 7'; 7''; 7''') vorgesehen sind.

6. Mähgerät nach einem der Ansprüche 1 bis 5, **dadurch gekennzeichnet, daß** an dem Tragteil (7; 7'; 7''; 7''') mehrere paarweise (9, 10; 11, 12; 11', 12') zusammenwirkende und über eine jeweilige Brückenschaltung (14, 14') mit einer Steuerelektronik (4'; 5) verbundene Dehnungsmeßstreifen vorgesehen sind.

7. Mähgerät nach Anspruch 6, **dadurch gekennzeichnet, daß** zumindest ein Paar (9, 10) der Dehnungsmeßstreifen eine die Biegebelastung (B) des Bauteils (13) erfassende Einbaulage aufweist und dabei achsparallel zur Längsachse (A) angeordnet ist.

8. Mähgerät nach Anspruch 6, **dadurch gekennzeichnet, daß** zumindest ein Paar (11, 12) der Dehnungsmeßstreifen eine die Torsionsbelastung (T) des Bauteils (13) erfassende und um 45° zur Längsachse (A) geneigte Einbaulage aufweist.

9. Mähgerät nach einem der Ansprüche 1 bis 8, **dadurch gekennzeichnet, daß** die Dehnungsmeßstreifen (9, 10; 11, 12; 11', 12') unmittelbar auf einem als Tragteil (7) vorgesehenen Anschlußrohr (13) des Mähkopfes über eine Klebeverbindung festgelegt sind.

10. Mähgerät nach einem der Ansprüche 1 bis 9, **dadurch gekennzeichnet, daß** die Dehnungsmeßstreifen (8'') an einem als Tragteil (7''') vorgesehenen Auslegearm (21) des Mähgeräts (3) vorgesehen sind.

11. Mähgerät nach einem der Ansprüche 1 bis 10, **dadurch gekennzeichnet, daß** die Dehnungsmeßstreifen (8') im Bereich des Mähkopfes (3) auf einer dessen bodenseitige Stützrolle (18) aufnehmenden Tragstrebe (20) als Tragteil (7'') vorgesehen sind.

12. Mähgerät nach Anspruch 11, **dadurch gekennzeichnet, daß** die Dehnungsmeßstreifen (8''') unmittelbar auf der Achse (22, 23) der Stützrolle (18) aufgeklebt sind.

13. Mähgerät nach einem der Ansprüche 1 bis 12, **dadurch gekennzeichnet, daß** das Tragteil (7) im Bereich der Dehnungsmeßstreifen (8) mit einer Schutzabdeckung (24) versehen ist.

14. Mähgerät nach einem der Ansprüche 1 bis 13, **dadurch gekennzeichnet, daß** die Verbindungsleitungen (15, 15', 16, 16'; 16'', 16''') aufweisenden Dehnungsmeßstreifen (9, 10; 11, 12; 11', 12') an Meßbrücken (14, 14') anliegen und diese über eine den Wandler (4') bildende Verstärkungseinheit sowie eine SPS-Steuerung (5) mit der Antriebshydraulik (6) verbunden sind.

## Claims

1. Mowing device having a mowing head (3) which can be fastened to a vehicle by means of an outrigger (2) and of which the pressure (D) applied to the ground (E, E') being worked on can be detected by a sensor arrangement (4) having a measured-value transducer and a converter and can be varied by a hydraulic control system (4'; 5; 6) which is connected to the sensor arrangement (4), **characterised in that** the mowing device (3) has, at least in the region of a carrying member (7, 7', 7", 7''') which forms a connection between the mowing head (3) and the vehicle outrigger (2), a measured-value transducer (8, 8', 8", 8''') which directly senses load states (B; T) on the carrying member (7, 7', 7", 7''') and which is formed by at least one strain-gauge (9, 10, 11, 12) which is connected to the carrying member by an adhesive-bonded joint.

2. Mowing device according to claim 1, **characterised in that** a plurality of measured-value transducers (8, 8', 8", 8"') belonging to a sensor arrangement (4) are arranged on the carrying member (7, 7', 7", 7''').

3. Mowing device according to claim 1 or 2, **characterised in that** it is provided with respective measured-value transducers (8, 8', 8", 8''') for the sensor arrangement (4) in the region of a plurality of carrying members (7, 7', 7", 7''').

4. Mowing device according to one of claims 1 to 3, **characterised in that** the measured-value transducer (8, 8', 8", 8"') is connected to a converter (4') which senses the change in voltage and/or resistance.

5. Mowing device according to one of claims 1 to 4, **characterised in that** a plurality of strain gauges (9, 10; 11, 12) are provided on the carrying member (7, 7', 7", 7''') as measured-value transducers (8, 8', 8", 8''').

6. Mowing device according to one of claims 1 to 5, **characterised in that** a plurality of strain gauges which co-operate in pairs (9, 10; 11, 12; 11', 12') and which are connected to controlling electronics (4'; 5) via respective bridge circuits (14, 14') are provided on the carrying member (7, 7', 7", 7''').

7. Mowing device according to claim 6, **characterised in that** the installed position of at least one pair (9, 10) of the strain gauges is such that the pair (9, 10) senses the bending load (B) on the component (13) and is arranged with its axes parallel to the longitudinal axis (A) in this case.

8. Mowing device according to claim 6, **characterised in that** the installed position of at least one pair (11, 12) of the strain gauges is such that the pair (11, 12) senses the torsional load (T) on the component (13) and is inclined at 45° to the longitudinal axis (A).

9. Mowing device according to one of claims 1 to 8, **characterised in that** the strain gauges (9, 10; 11, 12; 11', 12') are fastened by an adhesive-bond jointed directly to a connecting tube (13) of the mowing head, which connecting tube (13) is intended as a carrying member (7).

10. Mowing device according to one of claims 1 to 9, **characterised in that** the strain gauges (8") are provided on an outrigger arm (21) of the mowing device (3), which outrigger arm (21) is intended as a carrying member (7''').

11. Mowing device according to one of claims 1 to 10, **characterised in that** the strain gauges (8') are provided in the region of the mowing head (3) on a carrying strut (20) which receives the latter's supporting roller (18) for the ground and which acts as a carrying member (7").

12. Mowing device according to claim 11, **characterised in that** the strain gauges (8''') are adhesive-bonded directly to the shaft (22, 23) of the supporting roller (18).

13. Mowing device according to one of claims 1 to 12, **characterised in that** the carrying member (7) is provided with a protective cover (24) in the region of the strain gauges (8).

14. Mowing device according to one of claims 1 to 13, **characterised in that** the strain gauges (9, 10; 11, 12; 11', 12'), which have connecting leads (15, 15', 16, 16', 16", 16'''), are connected to measuring bridges (14, 14') and the latter are connected to the driving hydraulics (6) via an amplifier unit which forms the converter (4') and via a programmable logic controller (5).

## Revendications

1. Dispositif faucheur présentant une tête de coupe (3) pouvant être fixée à un véhicule par l'intermédiaire d'un bras (2), la pression d'appui (D) de ladite tête de coupe sur le terrain à travailler (E,E') pouvant être détectée au moyen d'un dispositif à capteur (4) présentant un capteur de valeurs de mesure et un convertisseur et étant modifiable par une commande hydraulique (4'; 5 ; 6) raccordée à celui-ci, **caractérisé en ce que** le dispositif faucheur (3) présente au moins dans la zone d'un élément porteur (7 ; 7' ; 7'' ; 7''') formant la liaison entre la tête de coupe (3) et le bras (2) du véhicule un capteur de valeurs de mesure (8 ; 8' ; 8'' ; 8''') détectant directement des états de sollicitation (B ; T) sur cet élément porteur (7 ; 7' ; 7'' ; 7'''), ledit capteur de valeurs de mesure étant formé par au moins une jauge extensométrique (9, 10, 11, 12) raccordée à l'élément porteur par une liaison adhésive.

2. Dispositif faucheur selon la revendication 1, **caractérisé en ce que** plusieurs capteurs de valeurs de mesure (8 ; 8' ; 8'' ; 8''') d'un dispositif à capteurs (4) sont prévus sur l'élément porteur (7 ; 7' ; 7'' ; 7''')

3. Dispositif faucheur selon la revendication 1 ou la revendication 2, **caractérisé en ce que** celui-ci est pourvu dans la zone de plusieurs éléments porteurs (7 ; 7' ; 7'' ; 7'''), de capteurs de valeurs de mesure respectifs (8, 8', 8'', 8''') pour le dispositif à capteurs (4).

4. Dispositif faucheur selon l'une quelconque des revendications 1 à 3, **caractérisé en ce que** le capteur de valeurs de mesure (8 ; 8' ; 8'' ; 8''') est connecté avec un convertisseur (4') détectant la variation de la tension électrique et/ou de la résistance.

5. Dispositif faucheur selon l'une quelconque des revendications 1 à 4, **caractérisé en ce que** plusieurs jauges extensométriques sont prévues en tant que capteurs de valeurs de mesure (8 ; 8' ; 8'' ; 8''') sur l'élément porteur (7 ; 7' ; 7'' ; 7''').

6. Dispositif faucheur selon l'une quelconque des revendications 1 à 5, **caractérisé en ce que** plusieurs jauges extensométriques coopérant par paires (9, 10 ; 11, 12 ; 11', 12') et connectées par l'intermédiaire d'un circuit en pont respectif (14, 14') à une électronique de commande (4' ; 5) , sont prévues sur l'élément porteur (7 ; 7' ; 7'', 7''').

7. Dispositif faucheur selon la revendication 6, **caractérisé en ce qu'**au moins une paire (9, 10) des jauges extensométriques présente une position d'installation détectant la sollicitation en flexion (B) du composant (13) et en l'occurrence disposée à axe parallèle à l'axe longitudinal (A).

8. Dispositif faucheur selon la revendication 6, **caractérisé en ce qu'**au moins une paire (11, 12) des jauges extensométriques présente une position d'installation détectant la sollicitation en torsion (T) du composant (13) et inclinée à 45° par rapport à l'axe longitudinal (A).

9. Dispositif faucheur selon l'une quelconque des revendications 1 à 8, **caractérisé en ce que** les jauges extensométriques (9, 10 ; 11, 12 ; 11', 12') sont fixées directement par l'intermédiaire d'une liaison adhésive sur un tuyau de raccordement (13) de la tête de coupe prévu en tant qu'élément porteur (7).

10. Dispositif faucheur selon l'une quelconque des revendications 1 à 9, **caractérisé en ce que** les jauges extensométriques (8'') sont prévues sur un bras (21) du dispositif faucheur (3), prévu en tant qu'élément porteur (7''').

11. Dispositif faucheur selon l'une quelconque des revendications 1 à 10, **caractérisé en ce que** les jauges extensométriques (8') sont prévues dans la zone de la tête de coupe (3) sur une traverse porteuse (20) recevant son cylindre d'appui situé du côté du sol, en tant qu'élément porteur (7'').

12. Dispositif faucheur selon la revendication 11, **caractérisé en ce que** les jauges extensométriques (8''') sont collées directement sur l'essieu (22, 23) du cylindre d'appui (18).

13. Dispositif faucheur selon l'une quelconque des revendications 1 à 12, **caractérisé en ce que** l'élément porteur (7) est pourvu dans la zone des jauges extensométriques (8) d'un recouvrement de protection (24).

14. Dispositif faucheur selon l'une quelconque des revendications 1 à 13, **caractérisé en ce que** les jauges extensométriques présentant des fils de connexion (15, 15', 16, 16' ; 16'', 16''') sont adjacents à des ponts de mesure (14, 14') et ceux-ci sont connectés par l'intermédiaire d'une unité d'amplification formant le convertisseur (4') et d'une commande SPS (5) à l'hydraulique d'entraînement (6).
